# EUROPEAN PATENT APPLICATION

(11) **EP 4 385 301 A1**
(43) Date of publication of application: **19.06.2024**
(21) Application number: 22209556.4
(22) Date of filing: 25.11.2022
(51) Int. Cl.: A01D 33/04, A01D 33/08, A23N 12/02, B07B 1/10

(54) **DEVICE FOR SEPARATING CROPS FROM DEBRIS**

(71) Applicant: AGEC AB, 243 23 Höör (SE)
(72) Inventor: HÅKANSSON, Reinhold, HÖÖR (SE)
(74) Representative: Ström & Gulliksson AB

(57) **Abstract**

A debris separating device (200) for separating debris (2) from crops (1) is presented. The debris separating device (200) comprises a receiving end (220) for receiving the collection of objects (5) and an output end (230) arranged vertically below the receiving end (220) for providing objects (5) downstream in a feeding flow (F) of the debris separating device (200). Further to this, the debris separating device (200) comprises a driven closed loop carrier medium (210) arranged between the receiving end and the output end (230). The driven closed loop carrier medium (210) is provided with one or more openings (212) adapted to permit crops (1) to pass there through, and the driven closed loop carrier medium (210) is arranged to provide objects (5) passing there through to the output end (230) of the debris separating device (200).

## Description

### TECHNICAL FIELD

The present invention relates to agricultural equipment and more precisely to a device for separating crops from debris.

### BACKGROUND

In general, when harvesting crops, manually or by machines, there is a risk that unwanted objects are mixed in with the crops. These unwanted objects may be e.g., leaves, twigs, stems, stones, dirt, clods etc., and are preferably separated from the crops before the crops are further processed.

Several arrangements are readily available on the market for separating particular crops from unwanted objects. To exemplify, some arrangements are based on sensors arranged to sense if a particular object is a crop or an unwanted object and separate crops from unwanted objects based on data from the sensors. Some arrangements are based on a pressure generating device, such as a fan, that pushes lighter crops (or lighter unwanted objects) laterally thereby separating the crops from the unwanted obj ects.

The prior art arrangements are generally configured to separate unwanted objects of a specific size range and/or a specific type. If unwanted objects being e.g. much larger than what the prior art arrangements are configured to handle, the unwanted object may clog or disrupt a flow of the prior art arrangements, or in worst case, even damage or destroy the prior art arrangements.

From the above it is understood that there is room for improvements.

### SUMMARY

An object of the present invention is to provide a new type of device for separating crops from debris which is improved over prior art and which eliminates or at least mitigates the drawbacks discussed above. More specifically, an object of the invention is to provide a device for separating crops from debris that is capable of sorting out debris having larger dimensions than the crops. These objects are achieved by the technique set forth in the appended independent claims with preferred embodiments defined in the dependent claims related thereto.

In a first aspect, a debris separating device for separating debris from crops is presented. The debris separating device comprises a receiving end for receiving the collection of objects, and an output end arranged vertically below the receiving end for providing objects downstream in a feeding flow of the debris separating device. Further to this, the debris separating device comprises a driven closed loop carrier medium arranged between the receiving end and the output end. The driven closed loop carrier medium is provided with one or more openings adapted to permit crops to pass there through. The driven closed loop carrier medium is arranged to provide objects passing there through to the output end of the debris separating device.

In some variants, the debris separating device comprises more than one drive closed loop carrier medium. In further variants, one or more of the driven closed loop carrier mediums is driven in an opposite direction of one or more the other driven closed loop carrier mediums. This is beneficial as it increases a capacity of the debris separating device.

In one variant, the output end is arranged between an upper portion of the driven closed loop carrier medium and a lower portion of the driven closed loop carrier medium. This is beneficial as it reduces a required space for the debris separating device.

In one variant, the driven closed loop carrier medium is arranged at an, in a horizontal plane, angle to the feeding flow of the arrangement. This is beneficial as large debris is transported away from the feeding flow and out of harms way.

In one variant, the angle is between 25° and 155° to the feeding flow.

In one variant, the angle is between 45 and 135° to the feeding flow.

In one variant, the angle is perpendicular to the feeding flow.

In one variant, the driven closed loop carrier medium is a conveyer belt arranged to loop about two or more pulleys of the large debris separating device.

In one variant, the driven closed loop carrier medium is provided with a plurality of openings arranged along the movable closed loop carrier medium. This is beneficial as it increases a capacity of the debris separating device.

In one variant, the crops are root crops. Root crops are particularly prone at being mixed up with stones, haulms, clods etc.

In one variant, the crops are potatoes. Potatoes are particularly prone at being mixed up with stones, haulms, clods etc.

In one variant, the crops are onions. Onions are particularly prone at being mixed up specifically with haulms but also with stones, clods etc.

In a second aspect, an arrangement for separating debris and crops from a collection of objects is presented. The arrangement comprises a first debris separating device and a second debris separating device arranged, in a feeding flow of the arrangement, downstream from the first debris separating device. The first debris separating device is the debris separating device according to the first aspect. The second debris separating device is a debris separating device configured to separate debris from crops having a size allowing it to pass through the one or more openings of the first debris separating device. The second debris separating device is a debris separating device configured to a separate debris and crops from a collection of objects, where a size of each object is such that it is permitted to pass through the one or more openings of the first debris separating device. In other words, the second debris separating device is a debris separating device configured to separate debris and crops from a collection of objects wherein each object has a size that allows it to pass through the one or more openings of the first debris separating device.

In one variant, the second debris separating device is arranged, at least partially, between an upper portion of the driven closed loop carrier medium and a lower portion of the driven closed loop carrier medium. This is beneficial as it reduces a space required for the arrangement.

In one variant, the second debris separating device is a clod separating device comprising a plurality of driven rollers arranged transversely across the feeding direction and being provided with a plurality of resilient roller members configured to cooperate with resilient roller members of an adjacent driven roller to separate clod debris from crops by crumbling the clod debris.

In one variant, the second debris separating device is configured to separate crops from debris by one or more pneumatic ejection devices configured to shift crops or debris vertically upwards. In a further variant, one of the one or more pneumatic ejection devices is a fan.

In one variant, the second debris separating device is configured to separate crops from debris by one or more actuateable mechanical ejection devices configured to be actuated based on data from one or more sensors of the second debris separating device.

In one variant, the arrangement further comprises a third debris separating device arranged downstream along the feeding flow form the second debris separating device. The third debris separating device is configured to separate crops from debris by one or more actuateable mechanical ejection devices configured to be actuated based on data from one or more sensors of the second debris separating device.

In one variant, the arrangement further comprises a third debris separating device arranged downstream along the feeding flow form the second debris separating device. The third debris separating device is configured to separate crops from debris by one or more pneumatic ejection devices. In a further variant, one of the one or more pneumatic ejection devices is a fan.

In one variant, the arrangement further comprises a third debris separating device arranged downstream along the feeding flow form the second debris separating device. The third debris separating device is a clod separating device comprising a plurality of driven rollers arranged transversely across the feeding direction and being provided with a plurality of resilient roller members configured to cooperate with resilient roller members of an adjacent driven roller to separate clod debris from crops by crumbling the clod debris.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a block diagram of a prior art arrangement for separating debris from crops;
Figs. 2a-d are top views of a debris separating device according to some embodiments of the present disclosure;
Figs. 3a-d are side views of a debris separating device according to some embodiments of the present disclosure;
Figs. 4 is a side view of a debris separating device according to some embodiments of the present disclosure;
Figs. 5 is a side view of a debris separating device according to some embodiments of the present disclosure;
Figs. 6a-e are top views of closed loop carrier mediums according to some embodiments of the present disclosure;
Fig. 7 is a side view of a driven closed loop carrier medium according to some embodiments of the present disclosure;
Figs. 8a-b are block diagram of arrangements for separating debris from crops according to some embodiments of the present disclosure; and
Fig. 9 is a perspective view of an arrangement for separating debris from crops according to some embodiments of the present disclosure.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly what is specified, as understood by a person of ordinary skill in the art. The terms "comprise" (and any forms thereof), "have" (and any forms thereof), "include" (and any form thereof) and "contain" (and any forms thereof) are open-ended linking verbs. As a result, a method that "comprises", "has", "includes" or "contains" one or more steps, possesses those one or more steps, but is not limited to possessing only those one or more steps.

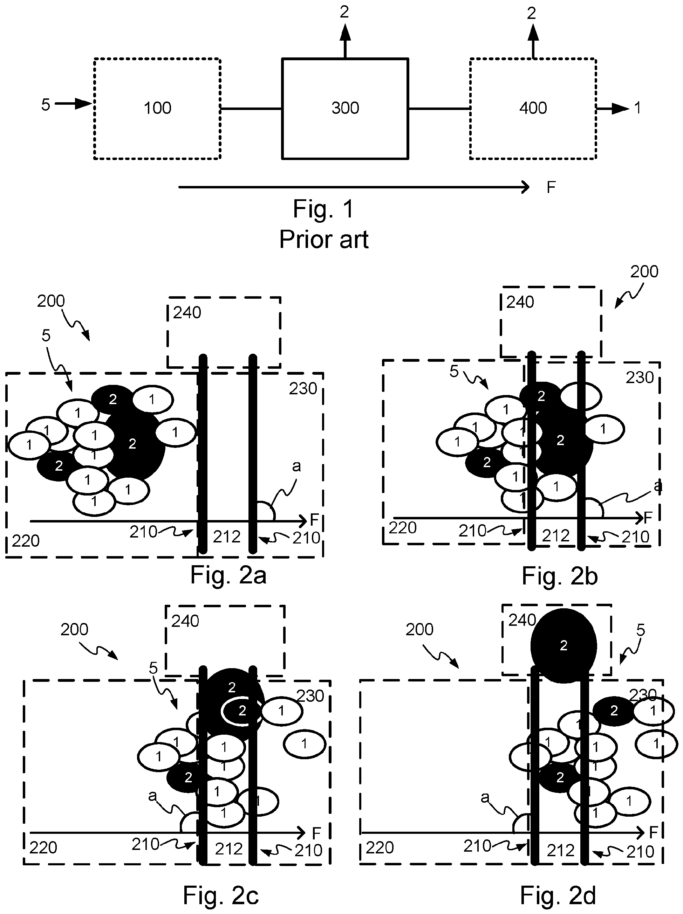

In Fig. 1, a prior art arrangement for separating debris 2 and crops 1 from a collection of objects 5. The term collection of objects 5 will be used herein to describe any mixture of debris 2, i.e. any unwanted objects and corps 1, i.e. wanted objects. The debris 2 may be generalized as every object that is not a crop 1. The debris 2 may be exemplified by, but not limited to, leaves, twigs, stems, stalks, haulms, stones, clod, dirt, soil, etc. The crops 1 may be any suitable crop 1 which's harvesting may cause the harvested crop to be mixed up with debris 2. Harvesting performed by machinery generally cause more debris 2 mixed up with the harvested crop 1. But also manually harvested crops 1 may be mixed up with debris, e.g. the stems of grapes. That is to say, the crops 1 mixed with debris 2 is not a problem that only occur with machine harvested crops 1. To exemplify, the crops 1 may be, but are not limited to, potatoes, apples, onions, carrots, grapes, pears, beets, parsnip, tomatoes, celeriac, turnip, etc.

From the above, it is clear that the present disclosure is not limited to any specific crop 1, or any specific debris 2. However, the majority of the examples and embodiments presented will be with reference to root crops in general or potatoes specifically. This is for efficiency of disclosure and should not be construed as limiting. The skilled person will understand, after digesting the teachings of the present disclosure, how to modify and adapt the examples and embodiments for other crops 1.

With continued reference to the prior art arrangement of Fig. 1, the prior art arrangement comprises a plurality of devices 100, 300, 400 arranged along a feeding flow F of the arrangement. The feeding flow F describe the flow of the crops 1 along the prior art arrangement, i.e. the flow of the crops 1 even if they are forming part of the collection of objects 5. The same reference and definition of feeding flow F will be adhered to throughout the present disclosure and is not specific for the prior art arrangement. Reference made where somethings is arranged downstream or upstream is to mean downstream or upstream in the feeding flow F even though this may not be explicitly mentioned at each reference.

The collection of objects 5 are generally received at a receiving device 100. The receiving device will differ depending on the type of crops 1, and how the crops 1 are harvested. For instance, if the crops 1 are root crops harvested by machine, the objects 5 may be brought to the arrangement by truck and dumped at the receiving device 100. In such cases, the receiving device 100 may be formed as a funnel, or a carrier configured to receive the objects 5 and transport them in the feeding flow F of the arrangement. Generally, the receiving device 100 is configured to control a flow of the objects 5 such that the full truckload of objects 5 are not immediately fed forward in the feeding flow F, but accumulated and allowed to trickle or flow at a suitable pace downstream in the feeding flow F. It should be mentioned that not all prior art arrangements comprise a receiving device and it may very well be that the objects are fed directly to a prior art debris separating device 300.

In Fig. 1, the prior art debris separating device 300 is arranged downstream from the receiving device 100. The prior art debris separating device 300 is configured to separate crops 1 from at least some of the debris 2. The crops 1 proceed downstream along the feeding flow F but at least some of the debris 2 is separated from the crops 1 and taken out of the feeding flow F. The separated debris 2 may be provided to further devices, collected destroyed etc.

The prior art debris separating device 300 may be provided with one or more sensors configured to determine if an object 5 at the sensor is a crop 1 or debris 2. Depending on the crops 1 and the expected debris 2, such a sensor may be a weight sensor where objects 5 having a weight outside a predefined weight interval are determined as being debris 2, and objects 5 within the predefined weight interval are determined as being crops 1. In other variants, the sensor may be an optical sensor configured to detect e.g., a wavelength of light reflected/absorbed by objects 5 and based on this, the debris separating device 300 may determine if the object 5 is a crop 1 or debris 2. If it is determined (with any means suitable) that the object 5 is debris, the prior art debris separating device 300 may comprise one or more actuateable mechanical ejection devices configured to be actuated based on data from one or more sensors. The mechanical ejection devices may be a trap door that is opened or closed based on the sensor data, or a mechanical pusher that actively pushes debris 2 out of the feeding path F.

Alternatively, or additionally, the prior art debris separating device 300 may be provided with one or more pressure generating (e.g. pneumatic) ejection devices. Such a device may be a fan configured to provide a flow of air that is configured to vertically shift either the crops 1 or the debris 2 and thereby separating the two. Alternatively, or additionally, one or more pressure generating ejection devices may be a suction device configured to vertically shift either the crops 1 or the debris 2 and thereby separating the two.

Shown downstream of the prior art debris separating device 300 in Fig. 1, but it may also be upstream of the prior art debris separating device 300, a prior art clod separating device 400 may be provided. The clod separating device 400 will be explained in further detail in following sections, but for now, the clod separating device 400 is configured to separate dirt debris 2, e.g. clods, from crops 1 by crumbling the clods into dirt.

The arrangement in Fig. 1 is proficient at separating dirt from debris assuming that the dirt does not significantly deviate from what the separating devices 300, 400 are configured to handle. For instance, if some debris is significantly larger than the crops, there is a risk that this debris 2 will clog the separating devices 300, 400. This may be the case for, in relation to the crops 1, large stones e.g., big twigs, the haulm of onions, big clods etc. To specify large and big debris, this may be described as debris 2 a having a volume that is at least double an expected largest volume of the crop 1, preferably having a volume that is at least five times an expected largest volume of the crop 1, and most preferably having a volume that is at least ten times an expected largest volume of the crop 1. However also comparably small objects may clog the separating devices 300, 400. This may be e.g. debris having a significantly different shape than the crops 1 such as e.g., a branch or a twig in a crop of e.g., plumes, grapes or apples. To specify significantly different shape, this may be described as debris 2 having a maximum extension that is at least double an expected maximum extension of the crop 1, preferably at least four times an expected maximum extension of the crop 1, and most preferably at least eight times an expected maximum extension of the crop 1. A maximum extension is the maximum distance measurable in any direction along the crop 1 or debris. For instance, a carrot's maximum extension is (generally) from a tip of the carrot to an end of the haulm (if included) or to an end where the haulm starts (if the haulm is not included).

Clogging of a separating device 300, 400 will cause downtime and productions stop which is costly. Further, personnel generally has to be alerted in order to clear the clog in order for production to restart. The stop may cause objects 5 to mass upstream from the clog, preventing farmers from unloading crops 1 at the receiving device 100 or, more critically, cause damage to the arrangement. The inventors behind the present disclosure have identified this issue and the teachings of the present disclosure are provided to solve, address or at least mitigate the identified problem.

In Figs. 2a-d, top views of a debris separating device 200 according to some embodiments of the present disclosure is shown. The debris separating device 200 may, without loss of compatibility, be referred to as a large debris separating device 200, a device 200 for separating large debris 2 from crops 1 or a device 200 for separating debris 2 from crops 1. Figs. 2a-d illustrate the flow of a collection of objects 5 along the feeding path F of the debris separating device 200. As seen in Figs. 2a-d, the collection of objects 5 comprises a mixture of crops 1 and debris 2. The crops 1 are comparably homogeneous in size and shape, but the debris 2 is shown comprising one debris object 2 that is significantly larger than the other debris 2. This large debris object 2 may cause clogging in separating device 300, 400 arranged downstream of the debris separating device 200 of Figs. 2a-d. As will be understood from the teachings of the present disclosures, the debris separating device 200 is especially adept at separating large debris 2 (as defined above) and/or debris having a significantly different shape (as defined above) compare to the wanted crop 1.

The debris separating device 200 comprises a receiving end 220 for receiving the collection of objects 5, an output end 230 arranged for providing objects 5 downstream in the feeding flow F of the debris separating device 200. The output end 230 is arranged downstream in the feeding flow F from the receiving end 220. The output end 230 is further arranged vertically below the receiving end 220. The debris separating device 200 further comprises a driven closed loop carrier medium 210, or closed loop carrier medium 210, arranged between the receiving end 220 and the output end 230. The closed loop carrier medium 210 (infinite loop) may be described as a conveyor belt. The closed loop carrier medium 210 is provided with one or more openings 212. The one or more openings 212 are adapted to permit crops 1 to pass there through. The closed loop carrier medium 210 is arranged such that objects 5 passing through the openings 212 are arriving at the output end 230 of the debris separating device 200. Objects 5 not passing through the openings 212, i.e. their size or shape is such that the shape and/or arrangement of the openings 212 prevents these objects 5 from passing there through, will be guided by the closed loop carrier medium 210 and thereby separated from the crops 1 (which have passed through the one or more openings 212 as these are adapted to permit the crops 1 to pass there though). In some embodiments, the debris separating device 200 comprises a debris output end 240 arranged to receive the debris 2 not having passed through the openings 212 of the closed loop carrier medium 210. The arrangement of the debris separating device 200 will be further detailed in the following.

In Fig. 2a, the collection of objects 5 is at the receiving end 220. The collection of objects 5 are moved along the feeding flow F by means of gravity and/or by means of one or more driven members such as a conveyor etc. As the collection of objects 5 are moved along the feeding flow F, they arrive at the driven closed loop carrier medium 210, see Fig. 2b. The crops 1, and also crop-sized debris 2 is permitted to pass through the one or more openings 212 of the closed loop carrier medium 210. However, as indicated above, and illustrated in Fig. 2c, the one or more openings 212 of the driven closed loop carrier medium 210 are too small or dimensioned such that the large debris object 2 will not be permitted to pass on to the output end 230 of the debris separating device 200. The large debris object 2 is transported along the driven closed loop carrier medium 210. In the embodiment of Figs. 2a-d, the driven closed loop carrier medium 210 is arranged at an angle a to the feeding flow F. This means that the large debris object 2 is transported away from the feeding flow F at the angle a, which is substantially perpendicular to the feeding flow F in Figs. 2a-d. In Fig. 2d, the large debris object 2 has exited (or is about to exit) the driven closed loop carrier medium 210 and is provided at the debris output end 240. Preferably, also the debris output end 240 is arranged vertically below the receiving end 220.

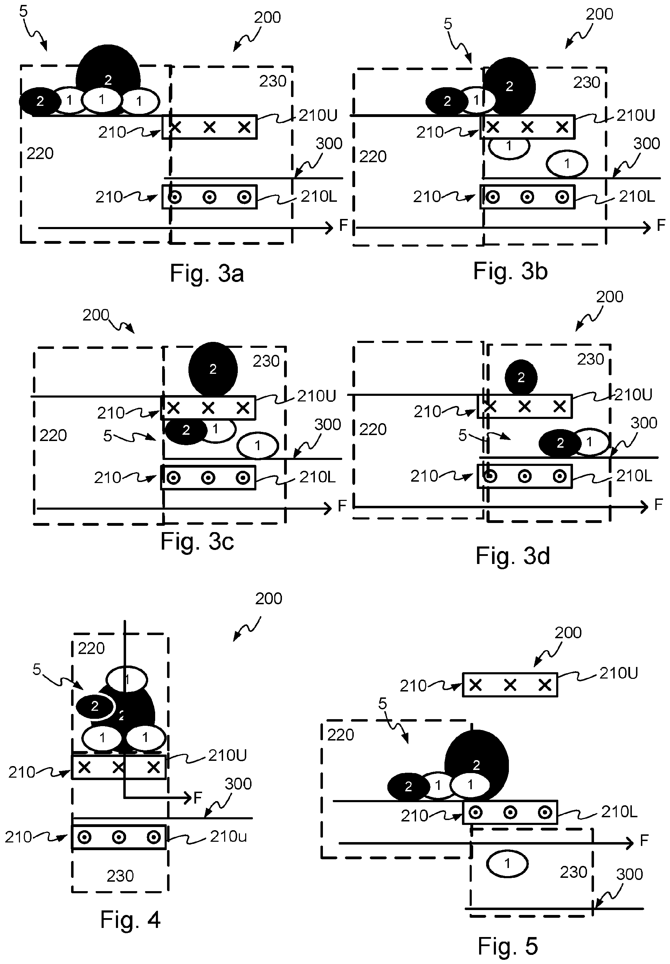

In Figs. 3a-d, the corresponding flow as in Figs. 2a-d is shown but from a side view. As seen, the driven closed loop carrier medium 210 comprises an upper belt portion 210U and a lower belt portion 210L arranged vertically below the upper belt portion 210U. As the driven closed loop carrier medium 210 is a driven closed loop carrier medium, a segment of the closed loop carrier medium 210 forming the upper belt portion 210U at one point in time, may form the lower belt portion 210L at a differnet point in time. In Figs. 3a-d, the upper belt portion 210U is moving into the figure and the lower belt portion 210L is moving out from the figure, as indicated by the dots and crosses on the respective portions 210U, 210L.

In Fig. 3a, as in Fig. 2a, the collection of objects 5 are at the receiving end 210 and moved along the feeding flow F onto the upper belt portion 210U of the driven closed loop carrier medium 210. As seen in Fig. 3b, corresponding to Fig. 2b, crops 1 are permitted to pass through the one or more openings 212 of the driven closed loop carrier medium 210. This means that the crops 1 will fall towards the lower belt portion 210L. However, the output end 230 is arranged vertically between the upper belt portion 210U and the lower belt portion 210L such that crops 1 passing through the one or more openings 212 of the driven closed loop carrier medium 210 are arriving at the output end 230. In Fig. 3c, corresponding to Fig. 2c, the large debris object 2 is not permitted to pass through the openings 212 of the driven closed loop carrier medium 210 but is transported along the driven closed loop carrier medium 210. In this embodiment, along the upper belt portion 210U into the figure which is illustrated in Fig. 3d, corresponding to Fig. 2d, by the large debris object 2 appearing smaller in size compared to e.g. Fig. 3a (due to it being moved further away into the figure).

In Figs. 2a-d and 3a-d, the receiving end 220 and the output end 230 are shown as physical parts or members of the debris separating device 200. However, this is but one example, and as will be apparent from later examples and embodiments, the receiving end 220 and the output end 230 may be sections of the debris separating device 200 or simply a reference to ends of the debris separating device 200 along the feeding flow F. Preferably, the output end 230 of the debris separating device 200 may be provided by an input section (input end) of a device arranged downstream from the debris separating device 200. Correspondingly, the receiving end 220 is preferably provided by an output end of a device arranged upstream from the debris separating device 200. To exemplify, if a receiving device 100 is present, an output end of the receiving device is preferably the receiving end 220 of the debris separating device 200.

In Fig. 4, and alternative arrangement of the debris separating device 200 is shown. In this embodiment, the receiving end 220 is arranged vertically above the upper belt portion 210U. As a consequence, the feeding flow F is vertical through the upper belt portion 210U, and continues in a horizontal direction after passing the upper belt portion 210U.

In Fig. 5, an alternative embodiment of the debris separating device 200 is shown. In this embodiment, the receiving end 220 is arranged between the upper belt portion 210U and the lower belt portion 210L. This means that crops 1 passing through the openings 212 of the driven closed loop carrier medium 210 will be collected (received by, provided to) an output end 230 arranged below the lower belt portion 210L.

From Figs. 2 through 5 it is apparent the arrangement of the driven closed loop carrier medium 210 and the receiving end 220 and output end 230 may be varied and that all variants provide an equitable result. However, embodiments wherein the output end 230 is provided between the upper belt portion 210U and the lower belt portion 210L are preferred embodiments. One benefit with this arrangement is that the volume required by the debris separating device 200 is reduced, especially if the output end 230 is provided in, forming part of or comprised in an downstream adjacent device.

In some embodiments, not shown, the receiving end 220 may be at a vertical level at or above the upper belt member 210U and the output end 230 be at or below a vertical level of the lower belt member 210L such that crops 1 will first pass though openings in the upper belt member 210U and then through the lower belt member 210L before arriving at the output end 230.

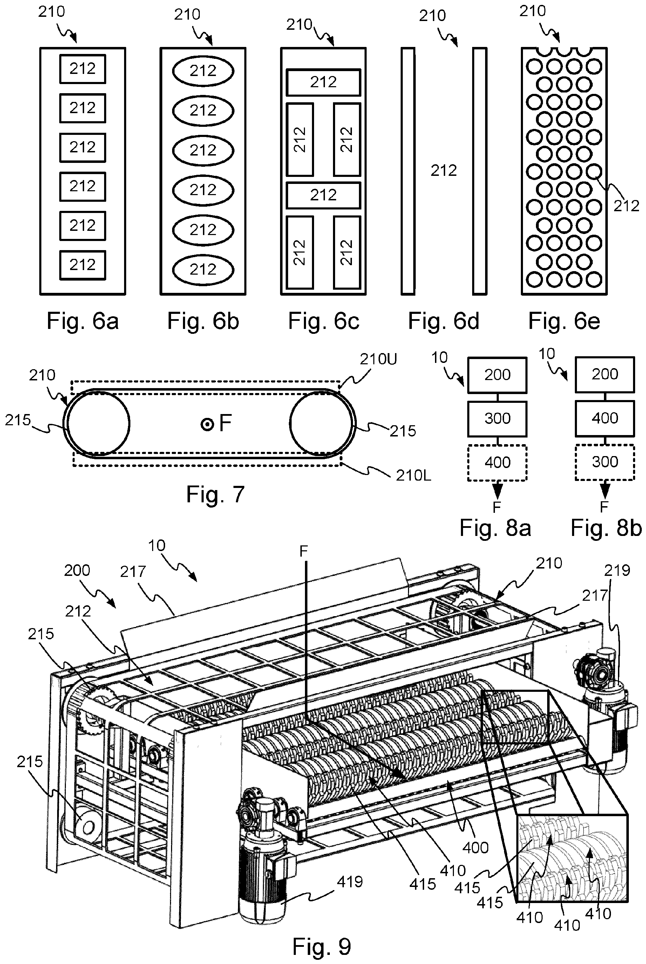

With reference to Figs. 6a-e, some exemplary, non limiting embodiments of the closed loop carrier medium 210 are shown in top views. In Fig. 6a, the closed loop carrier medium 210 comprises a plurality of rectangular openings 212 arranged in a common orientation and at equal distance along the closed loop carrier medium 210. In Fig. 6b, the closed loop carrier medium 210 comprises a plurality of elliptical openings 212 arranged in a common orientation and at equal distance along the closed loop carrier medium 210. In Fig. 6c, the closed loop carrier medium 210 comprises a plurality of rectangular openings 212 arranged at alternating orientations along the closed loop carrier medium 210. In Fig. 6d, the closed loop carrier medium 210 comprises only one opening 212 formed between two parallel portions of the closed loop carrier medium 210. In Fig. 6e, the closed loop carrier medium 210 comprises a plurality of circular openings 212 arranged in a common orientation and at equal distance along the closed loop carrier medium 210.

From Figs, 6a-e it is clear that the openings 212 may be any size shape or form and the most suitable size will depend on the crop 1 the debris separating device 200 is adapted to separate from debris 2. The size and shape of the openings 212 are adapted for a specific crop 1, and it may be that the size and shape of the openings 212 will be different depending on a variety of the crop 1. For instance, an average size of potatoes of one variety may be very different from an average size of potatoes of another variety. Generally, in order to determine a suitable size and shape of the openings 212 it may be beneficial to obtain an average maximum extension of the crop 1 and a standard deviation of the average maximum extension of the crop 1. A minimum dimension of the opening may be calculated as average maximum extension of the crop 1 with suitable margin that may be based on the standard deviation of the average maximum extension of the crop 1. In some embodiments, the dimensions of the openings 212 may be determined through experiments. Further, an expected debris 2 may further considered when dimensioning the openings 212.

In Fig. 7, a side view of the closed loop carrier medium 210 is shown looking into the feeding flow F. The closed loop carrier medium 210 is preferably looped about at least two pulleys 215. In some embodiments, the closed loop carrier medium 210 is looped about more than two pulleys 215 in order to increase a vertical distance between the upper and lower portions 210U, 210L of the closed loop carrier medium 210 without having to increase diameter of the pulleys 215. It may further be that further pulleys (in addition to the at least two pulleys 215) are added in order to e.g. angle or bias one of or both the upper and lower portions 21oU, 210L.

The closed loop carrier medium 210 is a driven closed loop carrier medium 210. The drive is preferably provided by one of more of the pulleys 215 being a motorized pulley 215. However, the closed loop carrier medium 210 may be driven other means and the specifics as to how to drive the closed loop carrier medium 210 are well within the knowledge of the skilled person. As will be seen in Fig. 9, the pulleys 215 may be driven by a motor 219.

As was shown in Figs. 2a-d, the closed loop carrier medium 210 may be arranged, in a horizontal plane, at an angle a to the feeding flow F. Although not shown, it should be mentioned that the closed loop carrier medium 210 may very well, additionally or alternatively, be arranged at an angle in a vertical plane to the feeding flow F. That is to say, the closed loop carrier medium 210 may be inclined upwards or downwards (such inclination may be provided with additional pulleys 215 such that the closed loop carrier medium 210 is horizontal at a portion where the crops 1 pass the openings 212 and inclined at portions where only the large debris object 2 are transported by the closed loop carrier medium 210). The angle a in the horizontal plane to the feeding flow may be provided to transport the large debris objects 2 away from the feeding flow F. It should be mentioned that the angle a may be 0° or 180° such that the large debris objects 2 are transported along the feeding flow F or opposite the feeding flow F. However, in preferred embodiments, the angle a is between 25° and 155° to the feeding flow F. In a more preferred embodiment, the angle a is between 45° and 135° to the feeding flow F. In a most preferred embodiment, the angle a is substantially perpendicular to the feeding flow F.

In Fig. 8a, a schematic view of an arrangement 10 for separating debris 2 and crops 1 from a collection of objects 5 is shown. The arrangement 10 comprises a first debris separating device 200. The first debris separating device 200 is preferably the debris separating device 200 presented herein with reference to any of the Figs. 2 to 7 (or 9), e.g. the large debris separating device 200. That is to say, the large debris separating device 200 according to any embodiment or example presented herein. The arrangement 10 further comprises a second debris separating device 300, 400 arranged downstream from the first debris separating device 200. Optionally, the arrangement 10 may comprise a third debris separating device 300, 400 arranged downstream from the first debris separating device 200. I Fig. 8a, the second debris separating device 300, 400 is the prior art debris separating device 300 presented with reference to Fig. 1 and the third debris separating device 300, 400 is the prior art clod separating device 400 presented with reference to Fig. 1 and which will be further detailed in later sections of the present disclosure.

In Fig. 8b, which is the preferred embodiment, the second debris separating device 300, 400 is the prior art clod separating device 400 presented with reference to Fig. 1 and which will be further detailed in the following. The third debris separating device 300, 400 is the prior art debris separating device 300 presented with reference to Fig. 1.

In Fig. 9, a preferred embodiment of the arrangement 10 for separating debris 2 and crops 1 from a collection of objects 5 is shown in a perspective view. The first debris separating device 200 is the large debris separating device 200 presented herein and the second debris separating device 300, 400 is the clod separating device 400 as previously presented. In Fig. 9, not all references are indicated in order not to clutter the Fig. For instance, only one of the plurality of openings 212 of the closed loop carrier medium 210 is indicated. In this embodiment, the large debris separating device 200 is provided with guiding panels 217 arranged along the closed loop carrier medium 210 at opposite sides. The guiding panels 217 are provided to reduce a risk that crops 1 are bouncing, rolling off the closed loop carrier medium 210. In this embodiment, the closed loop carrier medium 210 is supported by four pulleys 215 and the second debris separating device 300 is arranged between the upper and lower portions (not indicated in Fig. 9) of the closed loop carrier medium 210. In Fig. 9, the motor 219 configured to drive the closed loop carrier medium 210 is shown.

The second debris separating device 400 in Fig. 9, i.e. the clod separating device 400, comprises a plurality of driven rollers 410. The rollers 410 are driven by a common (but may be individual) motor 419. The rollers 410 are arranged transversely across the feeding flow F. As is best seen in the magnified portion of Fig. 9, each driven roller 410 is provided with a plurality of resilient roller members 415. These may be formed in any suitable shape or configuration. In Fig. 9, adjacent rollers 410 are configured with different roller members 415. In this embodiment, every second roller 410 is provided with roller members 415 having a disc-shape, and the other rollers 410 are provided with roller members 415 having a finger shape. The form and shape may, as mentioned, be any suitable shape or form configured such that rollers members 415 cooperate with roller members 415 of an adjacent roller 410 to separate clod debris 2 from crops 1 by crumbling the clod debris 2. Preferably, a rotational direction of each roller 410 is opposite a rotational direction of directly adjacent rollers 410.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A debris separating device (200) for separating debris (2) from crops (1), the debris separating device (200) comprising:
a receiving end (220) for receiving the collection of objects (5),
an output end (230) arranged vertically below the receiving end (220) for providing objects (5) downstream in a feeding flow (F) of the debris separating device (200),
a driven closed loop carrier medium (210) arranged between the receiving end and the output end (230), wherein the driven closed loop carrier medium (210) is provided with one or more openings (212) adapted to permit crops (1) to pass there through and the driven closed loop carrier medium (210) is arranged to provide objects (5) passing there through to the output end (230) of the debris separating device (200).

2. The debris separating device (200) of claim 1, wherein the output end (230) is arranged between an upper portion (210U) of the driven closed loop carrier medium (210) and a lower portion (210L) of the driven closed loop carrier medium (210).

3. The debris separating device (200) of claim 1 or 2, wherein the driven closed loop carrier medium (210) is arranged at an, in a horizontal plane, angle (a) to the feeding flow (F) of the arrangement (10).

4. The debris separating device (200) of claim 3, wherein the angle (a) is between 25° and 155° to the feeding flow (F), preferably between 45 and 135° to the feeding flow (F), and most preferably perpendicular to the feeding flow (F).

5. The debris separating device (200) of any one of the preceding claims, wherein the driven closed loop carrier medium (210) is a conveyer belt (210) arranged to loop about two or more pulleys (215) of the large debris separating device (200).

6. The debris separating device (200) of any one of the preceding claims, wherein the driven closed loop carrier medium (210) is provided with a plurality of openings (212) arranged along the movable closed loop carrier medium (210).

7. The debris separating device (200) of any one of the preceding claims, wherein the crops (1) are root crops (1).

8. The debris separating device (200) of any one of the preceding claims, wherein the crops (1) are potatoes (1).

9. An arrangement (10) for separating debris (2) and crops (1) from a collection of objects (5), the arrangement (10) comprising a first debris separating device (200) and a second debris separating device (300, 400) arranged, in a feeding flow (F) of the arrangement (10), downstream from the first debris separating device (200), wherein the first debris separating device (200) is the debris separating device according to any one of claims 1 to 8, and the second debris separating device (300, 400) is a debris separating device (300, 400) configured to separate debris (2) and crops (1) from a collection of objects (5) wherein each object (5) has a size that allows it to pass through the one or more openings (212) of the first debris separating device (200).

10. The arrangement (10) of claim 9, wherein the second debris separating device (300, 400) is arranged, at least partially, between an upper portion (210U) of the driven closed loop carrier medium (210) and a lower portion (210L) of the driven closed loop carrier medium (210).

11. The arrangement (10) of claim 9 or 10, wherein the second debris separating device (400) is a clod separating device (400) comprising a plurality of driven rollers (410) arranged transversely across the feeding direction (F) and being provided with a plurality of resilient roller members (415) configured to cooperate with resilient roller members (415) of an adjacent driven roller (410) to separate clod debris (2) from crops (1) by crumbling the clod debris (2).

12. The arrangement (10) of claim 9 or 10, wherein the second debris separating device (300) is configured to separate crops (1) from debris (2) by one or more pneumatic ejection devices configured to shift crops (1) or debris (2) vertically upwards.

13. The arrangement (10) of claim 9 or 10, wherein the second debris separating device (300) is configured to separate crops (1) from debris (2) by one or more actuateable mechanical ejection devices configured to be actuated based on data from one or more sensors of the second debris separating device (300).

14. The arrangement (10) of any one of claims 9 to 11 further comprising a third debris separating device (300) arranged downstream along the feeding flow (F) form the second debris separating device, wherein the third debris separating device (300) is configured to separate crops (1) from debris (2) by one or more actuateable mechanical ejection devices configured to be actuated based on data from one or more sensors of the second debris separating device (300), or wherein the third debris separating device (300) is configured to separate crops (1) from debris (2) by one or more pneumatic ejection devices.

15. The arrangement (10) of any one of claims 9, 10, 12 or 13 further comprising a third debris separating device (300) arranged downstream along the feeding flow (F) form the second debris separating device, wherein the third debris separating device (400) is a clod separating device (400) comprising a plurality of driven rollers (410) arranged transversely across the feeding direction (F) and being provided with a plurality of resilient roller members (415) configured to cooperate with resilient roller members (415) of an adjacent driven roller (410) to separate clod debris (2) from crops (1) by crumbling the clod debris (2).
